# EUROPEAN PATENT APPLICATION

(11) **EP 4 786 651 A1**
(43) Date of publication of application: **05.08.2026**
(21) Application number: 23954004.0
(22) Date of filing: 05.12.2023
(51) Int. Cl.: C25B 1/042, C25B 1/04, C25B 9/70, H02J 3/28

(54) **OFF-GRID HYBRID ELECTROLYTIC HYDROGEN PRODUCTION SYSTEM**

(30) Priority: 28.09.2023 CN 202311273562
(71) Applicant: China Energy Investment Corporation Limited, Beijing 100011 (CN); National Institute of Clean-and-Low-Carbon Energy, Beijing 102211 (CN)
(72) Inventor: WANG, Honggang, Beijing 102211 (CN); MOU, Shujun, Beijing 102211 (CN); XING, Xiaowen, Beijing 102211 (CN); ZHOU, Yipeng, Beijing 102211 (CN)
(74) Representative: Kador & Partner Part mbB
(86) International application number: PCT/CN2023/136589
(87) International publication number: WO 2025/065871

(57) **Abstract**

An off-grid hybrid electrolytic hydrogen production system provided in the present application comprises a new energy power generation unit and an energy storage unit. A power conversion unit converts electric energy output by the new energy power generation unit and the energy storage unit into electric energy suitable for hydrogen production. An electrolysis unit comprises a proton exchange membrane hydrogen production module and a solid oxide electrolysis module, used to produce hydrogen after the introduction of electric energy. A controller uses control of charge and discharge of the energy storage unit to track an electric energy fluctuation value output by the new energy power generation unit, so that a value of total electric energy power fluctuation output by the new energy power generation unit and the energy storage unit is within a set range. The described solution provided by the present application can improve the hydrogen production efficiency of the entire hydrogen production system, and ensure that the hydrogen production system can achieve off-grid operation. Moreover, the present application eliminates the influence of power generation fluctuation of a new energy power generation unit on a hydrogen production result, by means of causing the total power fluctuation output by the new energy power generation unit and the energy storage unit to be within a set range.

## Description

### CROSS-REFERENCES TO RELATED APPLICATIONS

The present application claims the priority of Chinese Patent Application No. 202311273562.9, entitled "Off-Grid Hybrid Electrolytic Hydrogen Production System," filed with the CNIPA on September 28, 2023, the entire content of which is incorporated herein by reference.

### TECHNICAL FIELD

The present application relates to the technical field of hydrogen preparation, in particular to an off-grid hybrid electrolytic hydrogen production system.

### BACKGROUND OF THE INVENTION

Hydrogen possesses the advantages of being green, low-carbon, and having high energy density; consequently, hydrogen energy has become a widely used energy source. As the demand for hydrogen energy continues to grow, research into hydrogen production has expanded significantly in the prior art. Current hydrogen production systems typically include an electrolysis unit, which may be a proton exchange membrane electrolysis module or an alkaline water electrolysis module. Electric energy is introduced through a power grid, and hydrogen production by electrolysis is realized by controlling a power of the proton exchange membrane electrolysis module and a power of the alkaline water electrolysis module. In the process of power-on, more power will be supplied by the power grid. However, energy sources of the power grid include energy provided by fossil fuels, which will cause certain pollution. Moreover, the efficiency of hydrogen production by the proton exchange membrane electrolysis and the alkaline water electrolysis in the prior art still leaves room for improvement.

### SUMMARY OF THE INVENTION

A technical problem to be solved by the present application is that the existing hydrogen production solution has certain pollution and the hydrogen production efficiency is low. Therefore, the present application proposes an off-grid hybrid electrolytic hydrogen production system.

The technical solutions of the present application provide an off-grid hybrid electrolytic hydrogen production system, including:
a renewable energy power generation unit, including at least one power generation module driven by renewable energy;
an energy storage unit for storing or releasing electric energy;
a power conversion unit, wherein an input end of the power conversion unit is connected with the renewable energy power generation unit and the energy storage unit, for converting electric energy output by the renewable energy power generation unit and the energy storage unit into electric energy suitable for hydrogen production;
an electrolysis unit, including a proton exchange membrane hydrogen production module and a solid oxide electrolysis module, wherein an input end of the electrolysis unit is connected with an output end of the power conversion unit, and the electrolysis unit generates hydrogen after being connected with the electric energy; and
a controller connected to the renewable energy power generation unit, the energy storage unit and the power conversion unit, wherein the controller distributes electric energy required by the energy storage unit and the hybrid electrolytic hydrogen production system according to an output electric energy value of the renewable energy power generation unit, and the energy storage unit is used for providing a reference voltage and frequency to the hybrid electrolytic hydrogen production system and smoothing out a fluctuation of the renewable energy power generation unit, so that a value of total electric energy fluctuation output by the renewable energy power generation unit and the energy storage unit is within a set range.

According to the off-grid hybrid electrolytic hydrogen production system in some solutions, the solid oxide electrolysis module is provided with a reducing gas inlet; the proton exchange membrane hydrogen production module is provided with a hydrogen outlet; and the hydrogen outlet is hermetically connected to the reducing gas inlet, and hydrogen produced by the proton exchange membrane hydrogen production module is partially conveyed to the solid oxide electrolysis module.

According to the off-grid hybrid electrolytic hydrogen production system in some solutions, the electrolysis unit further includes:
an alkaline hydrogen production module, wherein an input end of the alkaline hydrogen production module is connected to the output end of the power conversion unit.

According to the off-grid hybrid electrolytic hydrogen production system in some solutions, the alkaline hydrogen production module is provided with a gas-liquid separator, the proton exchange membrane hydrogen production module is provided with an oxygen outlet, and the oxygen outlet of the proton exchange membrane hydrogen production module is connected to the gas-liquid separator.

According to the off-grid hybrid electrolytic hydrogen production system in some solutions, cold gas output by the gas-liquid separator is partially output to a cooling gas input port of the power conversion unit to cool the power conversion unit.

The off-grid hybrid electrolytic hydrogen production system in some solutions further includes:
a heat exchange unit, including a thermal coupling module, wherein:
the thermal coupling module has energy interaction with the proton exchange membrane hydrogen production module, the solid oxide electrolysis module and the alkaline hydrogen production module;
the thermal coupling module includes a heat storage module, and the heat storage module includes one or more of a sensible heat storage submodule, a latent heat storage submodule and a thermochemical heat storage submodule; and
the heat storage module is used for converting excess electric energy into thermal energy and storing the thermal energy when electric energy provided by the power conversion unit is more than electric energy required for hydrogen production; and releasing the thermal energy to the proton exchange membrane hydrogen production module and/or the solid oxide electrolysis module and/or the alkaline hydrogen production module when the renewable energy power generation unit stops providing the electric energy.

The off-grid hybrid electrolytic hydrogen production system in some solutions further includes:
a heat exchange network module obtained by packaging a separation submodule of the proton exchange membrane hydrogen production module and a refrigeration submodule of the alkaline hydrogen production module, wherein:
the heat exchange network module is connected to the power conversion unit and used for cooling the power conversion unit.

The off-grid hybrid electrolytic hydrogen production system in some solutions further includes:
a water source for providing purified water for hydrogen production; and
a pipeline, wherein a part of the pipeline is arranged outside the power conversion unit, an input end of the pipeline is connected to the water source, and an output end of the pipeline is connected to a water inlet end of the electrolysis unit.

The off-grid hybrid electrolytic hydrogen production system in some solutions further includes:
an alkaline liquor tank for providing an alkaline liquor for the alkaline hydrogen production module; and
an alkaline liquor conveying pipe, wherein a part of the alkaline liquor conveying pipe is arranged outside the power conversion unit, an input end of the alkaline liquor conveying pipe is connected to the alkaline liquor tank, and an output end of the alkaline liquor conveying pipe is connected to an alkaline liquor inlet end of the alkaline hydrogen production module for providing alkaline liquor.

According to the off-grid hybrid electrolytic hydrogen production system in some solutions, the renewable energy power generation unit includes a wind power generation module and a photovoltaic power generation module; and
the controller tracks the output electric energy value of the renewable energy power generation unit to obtain an electric energy prediction value, and adjusts electric energy required by the hybrid electrolytic hydrogen production system and the energy storage unit according to the electric energy prediction value; and if the electric energy prediction value of the renewable energy power generation unit exceeds an actual output value, the controller controls the energy storage unit to store excess electric energy, and if the electric energy prediction value is lower than the actual output value, the controller controls the energy storage unit to output electric energy to supplement an electric energy difference required by the hybrid electrolytic hydrogen production system.

Compared with the prior art, the technical solutions of the present application have the following technical effects.

The off-grid hybrid electrolytic hydrogen production system provided by the present application includes the renewable energy power generation unit and the energy storage unit. The power conversion unit is used for converting the electric energy output by the renewable energy power generation unit and the energy storage unit into the electric energy suitable for hydrogen production. The electrolysis unit includes the proton exchange membrane hydrogen production module and the solid oxide electrolysis module for producing hydrogen after the electric energy is introduced. The controller tracks the electric energy output by the renewable energy power generation unit in real time according to charge and discharge of the energy storage unit, so that a value of total electric energy fluctuation output by the renewable energy power generation unit and the energy storage unit is within a set range. In the above solutions provided by the present application, the electrolysis unit includes the solid oxide electrolysis module, which has higher hydrogen production efficiency, so that a hydrogen production efficiency of the whole hydrogen production system can be improved. In addition, the off-grid operation of the hydrogen production system can be ensured by the solutions of the present application by the cooperation of the renewable energy power generation unit and the energy storage unit. Furthermore, by controlling the energy storage unit through the controller, the random fluctuation of power generation by the renewable energy power generation unit can be eliminated, the voltage and frequency required by the hybrid electrolytic hydrogen production system can be maintained, and an influence of power generation fluctuation of the renewable energy power generation unit on hydrogen production can be eliminated.

### DESCRIPTION OF THE DRAWINGS

The preferred embodiments in the present application will be described in detail with reference to the drawings hereinafter, which will help to understand the objectives and advantages of the present application, wherein:
FIG. 1 is a schematic structural diagram of an off-grid hybrid electrolytic hydrogen production system according to an embodiment of the present application;
FIG. 2 is a schematic structural diagram in which hydrogen output from a proton exchange membrane hydrogen production module is used as a reducing gas of a solid oxide electrolysis module according to an embodiment of the present application;
FIG. 3 is a schematic structural diagram of an off-grid hybrid electrolytic hydrogen production system according to another embodiment of the present application;
FIG. 4 is a schematic structural diagram of cooling a power conversion unit with oxygen output from a proton exchange membrane hydrogen production module and an alkaline hydrogen production module according to an embodiment of the present application;
FIG. 5 is a schematic diagram of an arrangement of a thermal coupling module according to an embodiment of the present application;
FIG. 6 is a schematic diagram of an arrangement of a heat exchange unit according to an embodiment of the present application;
FIG. 7 is a schematic structural diagram of cooling the power conversion unit with purified water for hydrogen production according to an embodiment of the present application;
FIG. 8 is a schematic structural diagram of cooling the power conversion unit with an alkaline liquor for hydrogen production according to an embodiment of the present application; and
FIG. 9 is a schematic structural diagram of a renewable energy power generation unit according to an embodiment of the present application.

### DESCRIPTION OF EXEMPLARY EMBODIMENTS

The following clearly and completely describes the technical solutions in the embodiment of the present application with reference to the drawings. Apparently, the described embodiments are merely some but not all of the embodiments of the present application. Based on the embodiments of the present application, those of ordinary skills in the art may obtain all the other embodiments without creative effort, which are all in the scope of the present application.

The orientations or positional relationships indicated by the terms such as " transverse", "longitudinal", "upper", "lower", "front", "back", "left", "right", "vertical", "horizontal", "top", "bottom", "inner", "outer" and the like, refer to the orientations or positional relationships shown in the drawings, which are only intended to facilitate describing the present invention and simplifying the description, and do not indicate or imply that the indicated devices or elements must have a specific orientation, be constructed and operated in a specific orientation, and therefore cannot be understood as a limitation of the present invention. In the description of the present application, it should be noted that the orientations or positional relationships indicated by the terms such as "center", "upper", "lower", "left", "right", "vertical", "horizontal", "inner", "outer" and the like, refer to the orientations or positional relationships shown in the drawings, which are only intended to facilitate describing the present invention and simplifying the description, and do not indicate or imply that the indicated devices or elements must have a specific orientation, be constructed and operated in a specific orientation, and therefore cannot be understood as a limitation of the present application. Furthermore, the terms "first", "second" and "third" are only used for descriptive purposes, and do not indicate or imply relative importance.

In the description of the present application, it should be noted that, unless otherwise specified and limited, terms such as "installation", "connected" and "connection", or the like, should be understood broadly, for example, the connection may be fixed connection, or detachable connection or integral connection; may be direct connection, may also be indirect connection through an intermediate medium, and may be communication inside two elements. The specific meaning of the above terms in the present application can be understood in a specific case by those of ordinary skills in the art.

In addition, the technical features involved in different embodiments of the present application described below can be combined with each other as long as they do not constitute conflicts with each other.

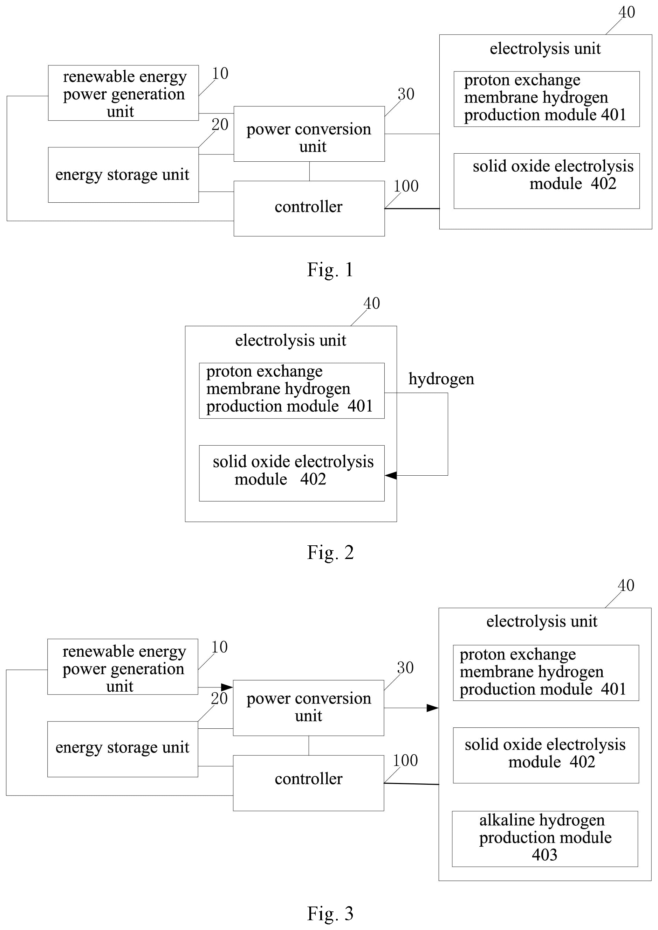

An off-grid hybrid electrolytic hydrogen production system according to an embodiment of the present application, as shown in FIG. 1, includes:
a renewable energy power generation unit 10, including at least one power generation module driven by renewable energy;
an energy storage unit 20 for storing or releasing electric energy;
a power conversion unit 30, wherein an input end of the power conversion unit is connected with the renewable energy power generation unit 10 and the energy storage unit 20, for converting electric energy output by the renewable energy power generation unit 10 and the energy storage unit 20 into electric energy suitable for hydrogen production; and the power conversion unit 30 may include at least one connection interface for connecting the renewable energy power generation unit 10 and the energy storage unit 20;
an electrolysis unit 40, including a proton exchange membrane hydrogen production module 401 and a solid oxide electrolysis module 402, wherein an input end of the electrolysis unit 40 is connected with an output end of the power conversion unit 30, and the electrolysis unit 40 generates hydrogen after being connected with the electric energy; a capacity of the proton exchange membrane hydrogen production module 401 of the electrolysis unit 40 accounts for more than 20%; the power conversion unit 30 includes a voltage conversion circuit, comprising electrical interfaces for matching different hydrogen production modules of the electrolysis unit 40, and the electrical interfaces are adaptively selected according to characteristics of the different hydrogen production modules such as efficiency, operating range and dynamic response; and
a controller 100 connected to the renewable energy power generation unit 10, the energy storage unit 20 and the power conversion unit 30, wherein the controller 100 distributes electric energy required by the energy storage unit 20 and the power conversion unit 30 of the hybrid electrolytic hydrogen production system according to an output electric energy value of the renewable energy power generation unit 10, and the energy storage unit 20 is used for providing a reference voltage and frequency to the power conversion unit 30 of the hybrid electrolytic hydrogen production system and smoothing out a fluctuation of the output electric energy value of the renewable energy power generation unit 10. The controller 100 and the energy storage unit 20 may be set independently, or integrated in the power conversion unit 30 or the electrolysis unit 40.

The off-grid hybrid electrolytic hydrogen production system in the above embodiment includes the renewable energy power generation unit 10 and the energy storage unit 20. The power conversion unit 30 is used for converting the electric energy output by the renewable energy power generation unit 10 and the energy storage unit 20 into the electric energy suitable for hydrogen production. The electrolysis unit 40 includes the proton exchange membrane hydrogen production module 401 and the solid oxide electrolysis module 402 for producing hydrogen after the electric energy is introduced. The controller 100 tracks the electric energy output by the renewable energy power generation unit 10 according to charge and discharge of the energy storage unit 20, so that a value of total electric energy fluctuation output by the renewable energy power generation unit 10 and the energy storage unit 20 is within a set range. In the above solution, the electrolysis unit 40 includes the solid oxide electrolysis module 402, which has higher hydrogen production efficiency, so that a hydrogen production efficiency of the whole hydrogen production system can be improved. In addition, the off-grid operation of the hydrogen production system can be ensured by the cooperation of the renewable energy power generation unit 10 and the energy storage unit 20. Furthermore, by controlling the energy storage unit 20 through the controller 100, the random fluctuation of power generation by the renewable energy power generation unit 10 can be eliminated, the voltage and frequency required by the hybrid electrolytic hydrogen production system can be maintained, the total electric energy output by the renewable energy power generation unit 10 and the energy storage unit 20 may be kept within a set range, an influence of power generation fluctuation of the renewable energy power generation unit 10 on hydrogen production can be eliminated, and a tracking accuracy of the electric energy output by the renewable energy power generation unit 10 can meet the requirements.

According to the off-grid hybrid electrolytic hydrogen production system in some solutions, as shown in FIG. 2, the solid oxide electrolysis module 402 is configured with a reducing gas inlet; the proton exchange membrane hydrogen production module 401 is configured with a hydrogen outlet; and the hydrogen outlet is hermetically connected to the reducing gas inlet, and hydrogen produced by the proton exchange membrane hydrogen production module 401 is partially conveyed to the solid oxide electrolysis module 402. In this solution, start-up and shutdown time of the solid oxide electrolysis module 402 is long, and a working pressure is much lower than that of the proton exchange membrane hydrogen production module 401, The solid oxide electrolysis module operates at 750-800°C under normal working conditions. Reducing gas is required at an anode to avoid material oxidation in transient period areas such as start-up and shutdown; therefore, in the solution, hydrogen from the proton exchange membrane hydrogen production module 401 is introduced into the solid oxide electrolysis module 402, the proton exchange membrane hydrogen production module 401 is turned on at startup, and the hydrogen is provided to the solid oxide electrolysis module 402 as the reducing gas to prevent a material of the solid oxide electrolysis module 402 from being oxidized.

According to the off-grid hybrid electrolytic hydrogen production system in some solutions, as shown in FIG. 3, the electrolysis unit 40 further includes an alkaline hydrogen production module 403, wherein an input end of the alkaline hydrogen production module 403 is connected to the output end of the power conversion unit 30. Through this solution, types of the hydrogen production modules are enriched and the hydrogen production efficiency is improved.

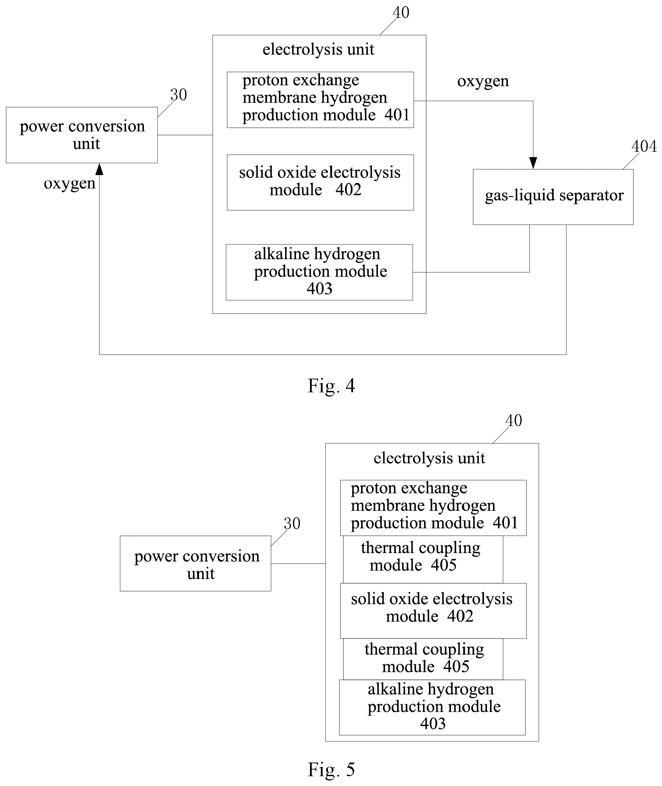

According to the off-grid hybrid electrolytic hydrogen production system in some solutions, as shown in FIG. 4, the alkaline hydrogen production module is provided with a gas-liquid separator 404, the proton exchange membrane hydrogen production module 401 is provided with an oxygen outlet, and the oxygen outlet of the proton exchange membrane hydrogen production module 401 is connected to the gas-liquid separator 404. In a low-load area, a pressure difference between a cathode and an anode of the alkaline hydrogen production module 403 needs to be strictly controlled. Therefore, by introducing the gas from the oxygen outlet of the proton exchange membrane hydrogen production module 401 to the gas-liquid separator 404 of the alkaline hydrogen production module 403, the pressure difference between the cathode and the anode of the alkaline hydrogen production module 403 can be adjusted.

Further, according to the off-grid hybrid electrolytic hydrogen production system as shown in FIG. 4, cold gas output by the gas-liquid separator 404 is partially output to a cooling gas input port of the power conversion unit 30 to cool the power conversion unit 30. Specifically, the cold gas is introduced into a back plate heat exchanger of a heating device of the power conversion unit 30. This solution cools the power conversion unit 30 by recovering cold energy of oxygen coming from the outlet of the gas-liquid separator 404, which can reduce a load of additional cooling water. In practice, an oxygen flow at the outlet of the gas-liquid separator 404 is proportional to a power value of the power conversion unit 30, resulting in an ability of automatic negative feedback and self-adjustment.

Further, as shown in FIG. 5, the off-grid hybrid electrolytic hydrogen production system further includes a heat exchange unit, including a thermal coupling module 405. The thermal coupling module 405 is contacted with the proton exchange membrane hydrogen production module 401, the solid oxide electrolysis module 402 and the alkaline hydrogen production module 403. The thermal coupling module 405 may further be used for converting excess electric energy into thermal energy and storing the thermal energy when electric energy provided by the power conversion unit 30 is more than electric energy required for hydrogen production; and releasing the thermal energy to the proton exchange membrane hydrogen production module 401 and/or the solid oxide electrolysis module 402 and/or the alkaline hydrogen production module 403 when the renewable energy power generation unit 10 stops providing the electric energy. The thermal coupling module 405 may be selected from insulated solid heat storage materials such as graphite, magnesia brick, concrete, coal-grade materials, or the like. By setting the thermal coupling module 405, cascaded utilization of energy can be realized, and the heat can be transferred in different time and space. In concrete implementation, the thermal coupling module 405 can store heat when the electric energy provided by the renewable energy power generation unit 10 is abundant, and provide heat to the alkaline hydrogen production module 403 when there is no wind and no light and when the renewable energy power generation unit 10 has no electric energy output. A cold start time of the alkaline hydrogen production module 403 may be as long as 1-2 hours, so the service life of the alkaline hydrogen production module 403 can be extended and the fast response ability of the alkaline hydrogen production module 403 can be improved by preventing the alkaline hydrogen production module 403 from entering a cold state by using the thermal coupling module 405. A distance between the solid oxide electrolysis module 402 and the proton exchange membrane hydrogen production module 401 may be set close to realize radiation heat transfer between the two. Because the solid oxide electrolysis module 402 needs to operate at 750°C, a function of radiation heat transfer is realized.

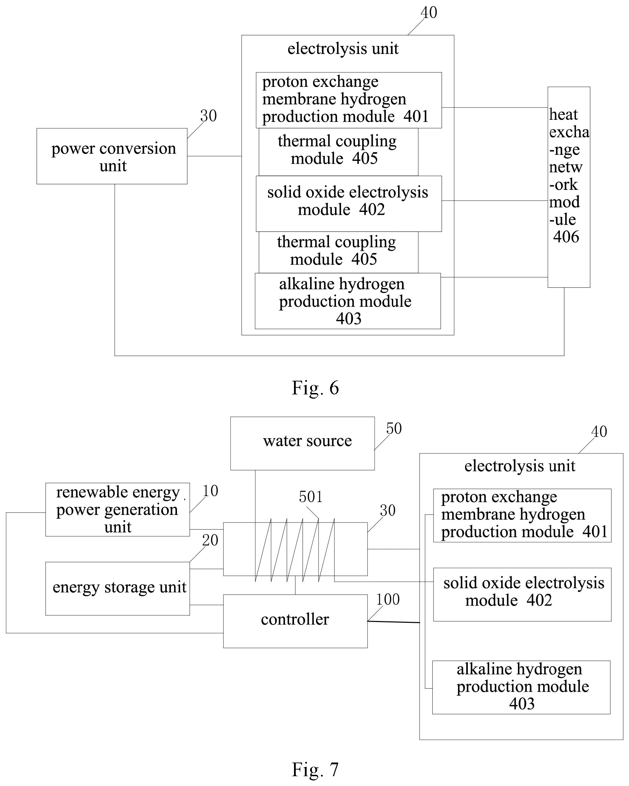

As shown in FIG. 6, the heat exchange unit further includes a heat exchange network module 406 obtained by packaging a separation submodule of the proton exchange membrane hydrogen production module 401 and a refrigeration submodule of the alkaline hydrogen production module 403, wherein the heat exchange network module 406 is connected to the power conversion unit 30 and used for cooling the power conversion unit 30. In the solution of the present application, a separation unit of the proton exchange membrane hydrogen production module 401 (such as steam-water separation and cooling function module, circulating water heating function module, purification module) and a separation unit of the alkaline hydrogen production module 403 (such as steam-water separation and cooling function module, alkaline liquor circulating heating function module, purification function module) are together designed as the heat exchange network module 406. The heat exchange network module 406 may be provided with a plurality of switching valves, and the above-mentioned function modules can be connected or disconnected by the switching valves to improve an operational flexibility during the heat exchange process. The heat exchange network module 406 may be adsorption refrigeration, steam compression refrigeration, steam absorption refrigeration, steam jet refrigeration, thermoelectric refrigeration, magnetic refrigeration, acoustic refrigeration, or the like. A cooling capacity of the heat exchange network module 406 may be used to cool the power conversion unit 30 to avoid introducing additional cooling water. The proton exchange membrane hydrogen production module 401 and the solid oxide electrolysis module are thermally coupled in the form of heat conduction or heat radiation.

As shown in FIG. 7, the off-grid hybrid electrolytic hydrogen production system in some solutions further includes:
a water source 50 for providing purified water for hydrogen production; and a pipeline 501, wherein a part of the pipeline is arranged outside the power conversion unit 30, an input end of the pipeline is connected to the water source 50, and an output end of the pipeline is connected to a water inlet end of the electrolysis unit 40. In this solution, purified water at room temperature (without cooling water) for electrolytic hydrogen production first flows through a heat dissipation surface of the power conversion unit 30 to remove the heat of the power conversion unit 30, thus avoiding a load of additional cooling water.

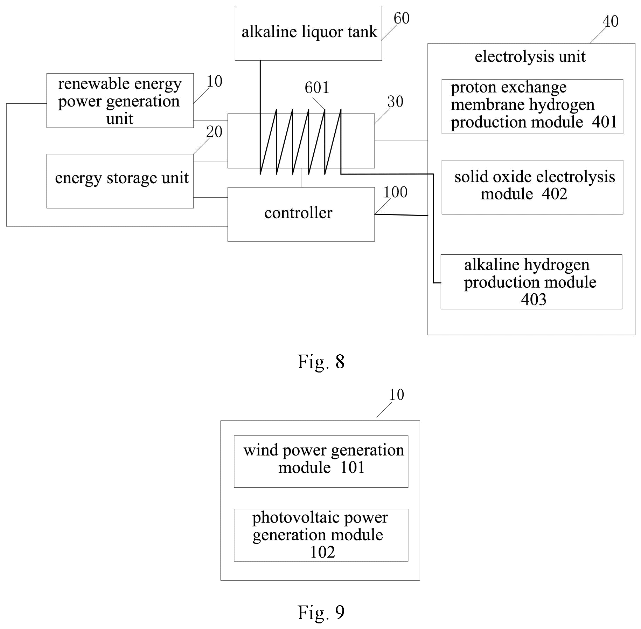

As shown in FIG. 8, the off-grid hybrid electrolytic hydrogen production system in some solutions further includes:
an alkaline liquor tank 60 for providing an alkaline liquor for the alkaline hydrogen production module 403; and an alkaline liquor conveying pipe 601, wherein a part of the alkaline liquor conveying pipe is arranged outside the power conversion unit 30, an input end of the alkaline liquor conveying pipe is connected to the alkaline liquor tank 60, and an output end of the alkaline liquor conveying pipe is connected to an alkaline liquor inlet end of the alkaline hydrogen production module 403 for providing alkaline liquor. In this solution, a fresh alkaline liquor or circulating alkaline liquor in the alkaline liquor tank 60 flows through the heat dissipation surface of the power conversion unit 30 through the alkaline liquor conveying pipe 601 to remove the heat of the power conversion unit 30 and avoid the load of the additional cooling water.

In the above solution, as shown in FIG. 9, the renewable energy power generation unit 10 in the off-grid hybrid electrolytic hydrogen production system includes a wind power generation module 101 and a photovoltaic power generation module 102. The controller 100 tracks the output electric energy value of the renewable energy power generation unit 10 and adjusts an output electric energy value of the energy storage unit 20 according to a tracking result. If the tracking result exceeds the set range, the controller controls the energy storage unit 20 to store the excess electric energy; and if the tracking result is lower than the set range, the controller controls the energy storage unit 20 to output electric energy to supplement an electric energy difference between the tracking result and the set range. Through this solution, the controller 100 can control the fluctuation of the electric energy generated by the wind power generation module 101 and the photovoltaic power generation module 102 within a certain range, and can achieve the same stability as the power grid, and thus can replace the power supply function of the power grid. This solution can operate stably in an off-grid state.

Obviously, the above-mentioned embodiments are merely examples for clarity of illustration and are not intended to limit the modes of execution. For those of ordinary skills in the art, other different forms of changes or variations can be made on the basis of the above description. It is not necessary or possible to exhaust all the implementations here. Obvious changes or variations derived therefrom are still within the scope of protection of the present application.

## Claims

1. An off-grid hybrid electrolytic hydrogen production system, comprising:
a renewable energy power generation unit, comprising at least one power generation module driven by renewable energy;
an energy storage unit for storing or releasing electric energy;
a power conversion unit, wherein an input end of the power conversion unit is connected with the renewable energy power generation unit and the energy storage unit, for converting electric energy output by the renewable energy power generation unit and the energy storage unit into electric energy suitable for hydrogen production;
an electrolysis unit, comprising a proton exchange membrane hydrogen production module and a solid oxide electrolysis module, wherein an input end of the electrolysis unit is connected with an output end of the power conversion unit, and the electrolysis unit generates hydrogen after being connected with the electric energy; and
a controller connected to the renewable energy power generation unit, the energy storage unit and the power conversion unit, wherein the controller distributes electric energy required by the energy storage unit and the hybrid electrolytic hydrogen production system according to an output electric energy value of the renewable energy power generation unit, and the energy storage unit is used for providing a reference voltage and frequency to the hybrid electrolytic hydrogen production system and smoothing out a fluctuation of the renewable energy power generation unit, so that a value of total electric energy fluctuation output by the renewable energy power generation unit and the energy storage unit is within a set range.

2. The off-grid hybrid electrolytic hydrogen production system according to claim 1, wherein:
the solid oxide electrolysis module is provided with a reducing gas inlet;
the proton exchange membrane hydrogen production module is provided with a hydrogen outlet; and
the hydrogen outlet is hermetically connected to the reducing gas inlet, and hydrogen produced by the proton exchange membrane hydrogen production module is partially conveyed to the solid oxide electrolysis module.

3. The off-grid hybrid electrolytic hydrogen production system according to claim 1, wherein the electrolysis unit further comprises:
an alkaline hydrogen production module, wherein an input end of the alkaline hydrogen production module is connected to the output end of the power conversion unit.

4. The off-grid hybrid electrolytic hydrogen production system according to claim 3, wherein:
the alkaline hydrogen production module is provided with a gas-liquid separator, the proton exchange membrane hydrogen production module is provided with an oxygen outlet, and the oxygen outlet of the proton exchange membrane hydrogen production module is connected to the gas-liquid separator.

5. The off-grid hybrid electrolytic hydrogen production system according to claim 4, wherein:
cold gas output by the gas-liquid separator is partially output to a cooling gas input port of the power conversion unit to cool the power conversion unit.

6. The off-grid hybrid electrolytic hydrogen production system according to claim 1, further comprising:
a heat exchange unit, comprising a thermal coupling module, wherein:
the thermal coupling module has energy interaction with the proton exchange membrane hydrogen production module, the solid oxide electrolysis module and the alkaline hydrogen production module;
the thermal coupling module comprises a heat storage module, and the heat storage module comprises one or more of a sensible heat storage submodule, a latent heat storage submodule and a thermochemical heat storage submodule; and
the heat storage module is used for converting excess electric energy into thermal energy and storing the thermal energy when electric energy provided by the power conversion unit is more than electric energy required for hydrogen production; and releasing the thermal energy to the proton exchange membrane hydrogen production module and/or the solid oxide electrolysis module and/or the alkaline hydrogen production module when the renewable energy power generation unit stops providing the electric energy.

7. The off-grid hybrid electrolytic hydrogen production system according to claim 6, wherein the heat exchange unit further comprises:
a heat exchange network module, obtained by packaging a separation submodule of the proton exchange membrane hydrogen production module and a refrigeration submodule of the alkaline hydrogen production module, wherein:
the heat exchange network module is connected to the power conversion unit and used for cooling the power conversion unit.

8. The off-grid hybrid electrolytic hydrogen production system according to claim 1, further comprising:
a water source for providing purified water for hydrogen production; and
a pipeline, wherein a part of the pipeline is arranged outside the power conversion unit, an input end of the pipeline is connected to the water source, and an output end of the pipeline is connected to a water inlet end of the electrolysis unit.

9. The off-grid hybrid electrolytic hydrogen production system according to any one of claims 3 to 5, further comprising:
an alkaline liquor tank for providing an alkaline liquor for the alkaline hydrogen production module; and
an alkaline liquor conveying pipe, wherein a part of the alkaline liquor conveying pipe is arranged outside the power conversion unit, an input end of the alkaline liquor conveying pipe is connected to the alkaline liquor tank, and an output end of the alkaline liquor conveying pipe is connected to an alkaline liquor inlet end of the alkaline hydrogen production module for providing alkaline liquor.

10. The off-grid hybrid electrolytic hydrogen production system according to any one of claims 1 to 9, wherein:
the renewable energy power generation unit comprises a wind power generation module and a photovoltaic power generation module; and
the controller tracks the output electric energy value of the renewable energy power generation unit to obtain an electric energy prediction value, and adjusts electric energy required by the hybrid electrolytic hydrogen production system and the energy storage unit according to the electric energy prediction value; and if the electric energy prediction value of the renewable energy power generation unit exceeds an actual output value, the controller controls the energy storage unit to store excess electric energy, and if the electric energy prediction value is lower than the actual output value, the controller controls the energy storage unit to output electric energy to supplement an electric energy difference required by the hybrid electrolytic hydrogen production system.
